(19) Europäisches Patentamt / European Patent Office / Office européen des brevets

(11) **EP 4 618 217 A1**

(12) **EUROPEAN PATENT APPLICATION**
published in accordance with Art. 153(4) EPC

(43) Date of publication:
**17.09.2025 Bulletin 2025/38**

(21) Application number: **23927887.2**

(22) Date of filing: **17.03.2023**

(51) International Patent Classification (IPC):
*H01M 10/0525* (2010.01)    *H01M 10/54* (2006.01)

(52) Cooperative Patent Classification (CPC):
**H01M 10/0525; H01M 10/54;** Y02E 60/10

(86) International application number:
**PCT/CN2023/082195**

(87) International publication number:
**WO 2024/192568 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology (Hong Kong) Limited**
**Hong Kong (HK)**

(72) Inventor: **XU, Xiaofu**
**Ningde, Fujian 352100 (CN)**

(74) Representative: **Gong, Jinping**
**CocreateIP**
**Neumarkter Straße 21**
**81673 München (DE)**

(54) **BATTERY CELL, BATTERY, AND ELECTRIC DEVICE**

(57)    Embodiments of this application provide a battery cell, a battery, and an electric apparatus. The battery cell includes: an electrode assembly; an electrolyte; and a housing, configured to accommodate the electrode assembly and the electrolyte. The battery cell satisfies

$$\frac{V}{CAP} \geq \frac{200}{(C_0 \times \rho_0)},$$ where $V$ represents a remaining volume inside the housing of the battery cell in a fully discharged state, measured in mL; $CAP$ represents a nominal capacity of the battery cell, measured in Ah; $C_0$ represents a theoretical specific capacity of a corresponding alkali metal in the battery cell, measured in mAh/g; and $\rho_0$ represents a theoretical density of the corresponding alkali metal in the battery cell, measured in g/cm³. The technical solution of this application prevents electrolyte leakage caused by the electrolyte being squeezed out due to excessive changes in the electrode assembly, thereby improving the safety performance of the battery.

**100**

FIG. 1

EP 4 618 217 A1

**Description**

**TECHNICAL FIELD**

This application relates to the field of battery technologies, and in particular, to a battery cell, a battery, and an electric apparatus.

**BACKGROUND**

In recent years, the application fields of lithium batteries have become increasingly extensive, such as energy storage power systems in electric, hydro, thermal power generation, and solar power stations, as well as electric bicycles, electric motorcycles, electric vehicles, military equipment, aerospace, and other fields. While lithium batteries have achieved significant development, higher requirements have also been put forward for their safety performance and other aspects.

Therefore, how to improve the safety performance of batteries is a problem that needs to be resolved urgently.

**SUMMARY**

This application is conducted in view of the above problem, aiming to provide a battery cell, a battery, and an electric apparatus that can improve the safety performance of the battery.

A first aspect of this application provides a battery cell, including: an electrode assembly; an electrolyte; and a housing, configured to accommodate the electrode assembly and the electrolyte. The battery cell satisfies

$$\frac{V}{CAP} \geq \frac{200}{(C_0 \times \rho_0)}$$, where V represents a remaining volume inside the housing of the battery cell in a fully discharged state, measured in mL; $CAP$ represents a nominal capacity of the battery cell, measured in Ah; $C_0$ represents a theoretical specific capacity of a corresponding alkali metal in the battery cell, measured in mAh/g; and $\rho_0$ represents a theoretical density of the corresponding alkali metal in the battery cell, measured in g/cm$^3$.

In the embodiments of this application, the battery cell includes an electrode assembly, an electrolyte, and a housing. The ratio of the remaining volume inside the housing to the nominal capacity of the battery cell is not less than the ratio of 200 to the product of the theoretical specific capacity and the theoretical density of the corresponding alkali metal in the battery cell. By ensuring that the relationship is established in the form of an equation between the remaining volume inside the housing, a nominal capacity of the battery cell, and the theoretical specific capacity and theoretical density of the corresponding alkali metal in the battery cell. In this way, during manufacturing of the battery cell, sufficient space can be reserved in the battery cell to cope with the volume changes of the electrode assembly during charge and discharge. This prevents electrolyte leakage caused by the electrolyte being squeezed out due to excessive changes in the electrode assembly, thereby improving the safety performance of the battery cell.

In some possible implementations, the battery cell satisfies $\frac{V}{CAP} \leq \frac{4000}{(C_0 \times \rho_0)}$.

In the embodiments of this application, to provide sufficient space for the electrode assembly, the ratio of the remaining volume inside the housing to the nominal capacity of the battery cell is not less than the ratio of 200 to the product of the theoretical specific capacity and the theoretical density of the corresponding alkali metal in the battery cell. However, a too large volume of the battery housing affects the volumetric energy density of the battery. The ratio of the remaining volume inside the housing to the nominal capacity of the battery cell is not greater than a ratio of 4000 to the product of the theoretical specific capacity and the theoretical density of the corresponding alkali metal in the battery cell, helping to improve the safety performance of the battery cell while ensuring a high volumetric energy density of the battery cell.

In some possible embodiments, the battery cell further satisfies at least one of the following conditions: (1) $CAP$ is not less than 1 Ah, optionally, 1 Ah$\leq CAP \leq$300 Ah; (2) 500 mAh/g$\leq C_0 \leq$3700 mAh/g; (3) 0.5 g/cm$^3 \leq \rho_0 \leq$3.0 g/cm$^3$; and (4) a volumetric energy density $VED$ of the battery cell satisfies 100 Wh/L$\leq VED \leq$600 Wh/L.

In the embodiments of this application, the $CAP$, $C_0$, $\rho_0$ and $VED$ of the battery cell meet the above requirements, ensuring good performance of the battery.

In some possible embodiments, under a condition that the battery cell is a lithium battery cell, the lithium battery cell satisfies at least one of the following conditions: (1) 1500 mAh/g$\leq C_0 \leq$3700 mAh/g; (2) 0.5 g/cm$^3 \leq \rho_0 \leq$2.0 g/cm$^3$; (3) the lithium battery cell is a lithium metal battery cell; and (4) a volumetric energy density $VED$ of the lithium-ion battery cell satisfies 100 Wh/L$\leq VED \leq$900 Wh/L.

In the embodiments of this application, the $CAP$, $C_0$, $\rho_0$ and $VED$ of the battery cell meet the above requirements, ensuring good performance of the battery.

In some possible embodiments, under the condition that the battery cell is a lithium battery cell, a ratio of $V/CAP$ to

$200/(C_0 \times \rho_0)$ is 2-20 mL/Ah, optionally, 2-10 mL/Ah.

In the embodiments of this application, under the condition that the battery cell is a lithium battery cell, the ratio of $V/CAP$ to $200/(C_0 \times p_0)$ is maintained at 2-20 mL/Ah, particularly 2-10 mL/Ah, helping to improve the safety performance of the battery cell while ensuring a high volumetric energy density of the battery cell.

In some possible embodiments, under a condition that the battery cell is a sodium battery cell, the sodium battery cell satisfies at least one of the following conditions: (1) 400 mAh/g$\leq C_0 \leq$1200 mAh/g; (2) 0.8 g/cm$^3 \leq \rho_0 \leq$3.5 g/cm$^3$; (3) the sodium battery cell is a sodium metal battery cell; and (4) a volumetric energy density $VED$ of the sodium battery cell satisfies 150 Wh/L$\leq VED \leq$300 Wh/L.

In the embodiments of this application, the $CAP$, $C_0$, $\rho_0$ and $VED$ of the battery cell meet the above requirements, ensuring good performance of the battery.

In some possible embodiments, under the condition that the battery cell is a sodium battery cell, a ratio of $V/CAP$ to $200/(C_0 \times \rho_0)$ is 2-30 mL/Ah, optionally, 2-13 mL/Ah.

In the embodiments of this application, under a condition that the battery cell is a sodium battery, the ratio of $V/CAP$ to $200/(C_0 \times \rho_0)$ is maintained at 2-30 mL/Ah, particularly 2-13 mL/Ah, helping to improve the safety performance of the battery cell while ensuring a high volumetric energy density of the battery cell.

In some possible embodiments, the electrode assembly includes a negative electrode plate, and the negative electrode plate includes an alkali metal.

In the embodiments of this application, as the battery cell includes the negative electrode plate with the alkali metal, the technical solution of this application may also be applied to battery cells with alkali metal negative electrodes.

A second aspect of this application provides a battery, including the battery cell according to any one of the embodiments of the first aspect of this application.

A third aspect of this application provides an electric apparatus, including the battery according to the second aspect of this application.

## BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following description show merely some embodiments of this application, and a person of ordinary skill in the art may still derive other drawings from the accompanying drawings without creative efforts.

FIG. 1 is a schematic structural diagram of a battery cell according to an embodiment of this application.
FIG. 2 is a schematic diagram of a battery cell according to an embodiment of this application.
FIG. 3 is a schematic structural diagram of a battery according to an embodiment of this application.
FIG. 4 is a schematic structural diagram of an electric apparatus according to an embodiment of this application.

## DESCRIPTION OF EMBODIMENTS

The following describes the embodiments of a battery cell, a battery, and an electric apparatus of this application in detail with appropriate reference to the accompanying drawings, but unnecessary detailed descriptions may be omitted. For example, detailed descriptions of well-known matters and repeated descriptions of actually identical structures have been omitted. In addition, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that particular range. Ranges defined in this way may or may not include end values, and any combination may be used, meaning that any lower limit may be combined with any upper limit to form a range. For example, if ranges of 60-120 and 80-110 are provided for a specific parameter, it is understood that ranges of 60-110 and 80-120 can also be envisioned. In addition, if low limit values of a range are given as 1 and 2, and upper limit values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer among 2, 3, 4, 5, 6, 7, 8, 9, 10, 11, 12, and the like.

Unless otherwise stated, all the embodiments and optional embodiments of this application can be combined with each other to form new technical solutions.

Unless otherwise stated, all the technical features and optional technical features of this application can be combined with each other to form new technical solutions.

Unless otherwise specified, all the steps in this application can be performed sequentially or randomly, preferably, performed sequentially. For example, the method including steps (a) and (b) indicates that the method may include steps (a) and (b) performed sequentially or may include steps (b) and (a) performed sequentially. For example, the foregoing method may further include step (c), indicating that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

The terms "above," "below," "greater than," or "less than" as used in this application include the stated number. For example, "at least one" means one or more, and "at least one of A and B" means "A," "B," or "A and B."

Unless otherwise stated, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

Alkali metal batteries, such as lithium and sodium batteries, are widely used in consumer electronics due to advantages including high energy density, high power density, and long cycle life. In recent years, with the continuous development of electric vehicles and energy storage systems, demands for the safety performance of alkali metal batteries have also increased.

For existing alkali metal batteries, the electrode assembly in the battery may undergo volume swelling due to repeated charge and discharge of the battery. When a volume change rate of the electrode assembly is too large, the electrolyte cannot be accommodated in the limited space of the housing, and the electrolyte in the battery may be squeezed out. When the volume change rate of the electrode assembly reaches a certain level, the electrolyte may be expelled from the battery under high pressure, posing a certain threat to the safety performance of the battery. Therefore, it is particularly important to develop large-scale energy storage systems with high safety performance.

The following describes the battery cell, the battery, and the electric apparatus of this application with reference to the drawings.

The battery cell of this application may be a lithium-ion battery, a lithium metal battery, a sodium-ion battery, or the like. This application does not limit the type of the battery, and a lithium-ion battery is used as an example for description.

[Battery cell]

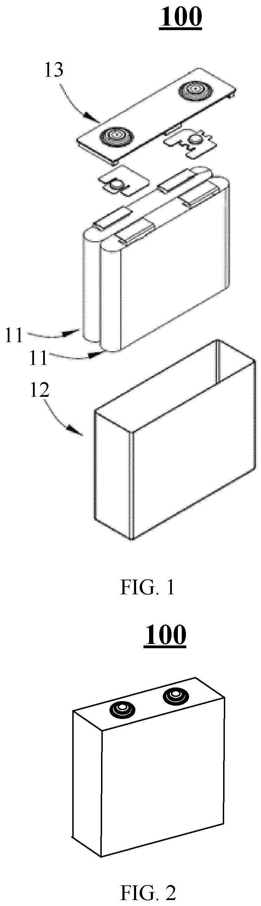

According to a first aspect, this application provides a battery cell 100. FIG. 1 is a schematic structural diagram of a battery cell according to an embodiment of this application. As shown in FIG. 1, the battery cell 100 includes: an electrode assembly 11; an electrolyte; and a housing 12, configured to accommodate the electrode assembly 11 and the electrolyte. The battery cell 100 satisfies $\frac{V}{CAP} \geq \frac{200}{(C_0 \times \rho_0)}$, where $V$ represents a remaining volume inside the housing 12 of the battery cell 100 in a fully discharged state, measured in mL; $CAP$ represents a nominal capacity of the battery cell 100, measured in Ah; $C_0$ represents a theoretical specific capacity of a corresponding alkali metal in the battery cell 100, measured in mAh/g; and $\rho_0$ represents a theoretical density of the corresponding alkali metal in the battery cell 100, measured in g/cm$^3$.

It has been found through research that by ensuring that the ratio of $V$ to $CAP$ of the battery cell 100 is not less than the ratio of 200 to the product of the theoretical specific capacity and the theoretical density of the corresponding alkali metal in the battery cell 100, sufficient space can be reserved inside the housing to cope with the volume change rate of the electrode assembly 11. This reduces the probability of the electrolyte being squeezed out of the housing 12 under high pressure, thereby improving the safety performance of the battery cell 100.

The relationship is established in the form of an equation between the remaining volume inside the housing 12, a nominal capacity of the battery cell 100, and the theoretical specific capacity and theoretical density of the corresponding alkali metal in the battery cell 100. In this way, during manufacturing of the battery cell 100, sufficient space can be reserved inside the battery cell 100 to cope with the volume change of the electrode assembly 11 during charge and discharge. This prevents electrolyte leakage caused by the electrolyte being squeezed out due to excessive changes in the electrode assembly 11, thereby improving the safety performance of the battery cell 100. In addition, the equation can be universal and normalized as expressed using the ratio of the volume to the nominal capacity.

It should be noted here that $V$ represents the remaining volume inside the housing 12 of the battery cell 100 in a fully discharged state, that is, the remaining volume inside the housing 12 of the battery cell 100 in a fully discharged state after removal of all materials such as mechanical parts, the electrode assembly 12, and the electrolyte. The mechanical parts include but are not limited to connecting pieces and safety structural members. The fully discharged state refers to the state where the battery is discharged at a current density of 0.04C until the capacity of the battery is less than or equal to 1% of the nominal capacity.

The nominal capacity of the battery cell 100 refers to the product of all the current output and the discharge time when the battery cell 100 in a fully charged state is discharged at a constant current of 0.33C and a constant voltage to a termination voltage.

Additionally, $C_0$ refers to the theoretical specific capacity of the corresponding alkali metal in the battery cell 100. Specifically, if the battery cell 100 is a sodium-ion battery and the corresponding alkali metal is sodium metal, $C_0$ is 1166 mAh/g, and if the battery cell 100 is a lithium-ion battery and the corresponding alkali metal is lithium metal, $C_0$ is 3860 mAh/g. $\rho_0$ and $C_0$ are determined using the same method, which is not elaborated herein.

Additionally, $\dfrac{200}{(C_0 \times \rho_0)}$ is derived from $\dfrac{1000}{(C_0 \times \rho_0 \times 5)}$, where 1000 represents the unit conversion factor between $C_0$ and CAP.

In some embodiments, the battery cell 100 satisfies $\dfrac{V}{CAP} \leq \dfrac{4000}{(C_0 \times \rho_0)}$.

In the foregoing solution, to provide sufficient space for the electrode assembly 11, the ratio of the remaining volume inside the housing 12 to the nominal capacity of the battery cell 100 is not less than the ratio of 200 to the product of the theoretical specific capacity and the theoretical density of the corresponding alkali metal in the battery cell 100. However, a too large volume of the battery housing affects the volumetric energy density of the battery. The ratio of the remaining volume inside the housing to the nominal capacity of the battery cell is not greater than a ratio of 4000 to the product of the theoretical specific capacity and the theoretical density of the corresponding alkali metal in the battery cell, helping to improve the safety performance of the battery cell while ensuring a high volumetric energy density of the battery cell.

In some possible embodiments, the battery cell further satisfies at least one of the following conditions: (1) *CAP* is not less than 1 Ah, optionally, 1 Ah$\leq$*CAP*$\leq$300 Ah; (2) 500 mAh/g$\leq C_0 \leq$3700 mAh/g; (3) 0.5 g/cm$^3 \leq \rho_0 \leq$3.0 g/cm$^3$; and (4) a volumetric energy density *VED* of the battery cell satisfies 100 Wh/L$\leq$*VED*$\leq$600 Wh/L.

In the foregoing solution, the *CAP*, $C_0$, $\rho_0$ and *VED* of the battery cell meet the above requirements, ensuring good performance of the battery.

For example, $C_0$ of Li is 3680 mAh/g, $C_0$ of Na is 1165 mAh/g, and $C_0$ of K is 687 mAh/g.

In another example, $\rho_0$ of Li is 0.534 g/cm$^3$, $\rho_0$ of Na is 0.97 g/cm$^3$, and $\rho_0$ of K is 0.86 g/cm$^3$.

In some embodiments, under a condition that the battery cell 100 is a lithium battery cell, the lithium battery cell 100 satisfies at least one of the following conditions: (1) 1500 mAh/g$\leq C_0 \leq$3700 mAh/g; (2) 0.5 g/cm$^3 \leq \rho_0 \leq$2.0 g/cm$^3$; (3) the lithium battery cell is a lithium metal battery cell; and (4) a volumetric energy density *VED* of the lithium battery cell satisfies 100 Wh/L$\leq$*VED*$\leq$900 Wh/L.

In the foregoing solution, the CAP, $C_0$, $\rho_0$ and *VED* of the battery cell 100 meet the above requirements, ensuring good performance of the battery.

In some embodiments, under the condition that the battery cell is a lithium battery cell, a ratio of *V*/*CAP* to 200/($C_0 \times \rho_0$) is 2-20 mL/Ah, optionally, 2-10 mL/Ah.

In the foregoing solution, under the condition that the battery cell 100 is a lithium battery, the ratio of *V*/*CAP* to 200/($C_0 \times \rho_0$) is maintained at 2-20 mL/Ah, particularly 2-10 mL/Ah, helping to improve the safety performance of the battery cell while ensuring a high volumetric energy density of the battery cell.

In some embodiments, under a condition that the battery cell 100 is a sodium battery cell, the sodium battery cell satisfies at least one of the following conditions: (1) 400 mAh/g$\leq C_0 \leq$1200 mAh/g; (2) 0.8 g/cm$^3 \leq \rho_0 \leq$3.5 g/cm$^3$; (3) the sodium battery cell is a sodium metal battery cell; and (4) a volumetric energy density *VED* of the sodium battery cell satisfies 150 Wh/L$\leq$*VED*$\leq$300 Wh/L.

In the above solution, the CAP, $C_0$, $\rho_0$ and *VED* of the battery cell meet the above requirements, ensuring a high energy density of the battery.

In some embodiments, under the condition that the battery cell 100 is a sodium battery cell, a ratio of *V*/*CAP* to 200/($C_0 \times \rho_0$) is 2-30 mL/Ah, optionally, 2-13 mL/Ah.

In the foregoing solution, under a condition that the battery cell 100 is a sodium battery cell, the ratio of *V*/*CAP* to 200/($C_0 \times \rho_0$) is maintained at 2-30 mL/Ah, particularly 2-13 mL/Ah, helping to improve the safety performance of the battery cell while ensuring a high volumetric energy density of the battery cell.

In some embodiments, the electrode assembly 11 includes a negative electrode plate, and the negative electrode plate includes an alkali metal.

The negative electrode plate includes an alkali metal, which may mean that the alkali metal is included before charge or the alkali metal is present in the negative electrode plate during charge. In other words, the negative electrode plate may directly contain an alkali metal layer, or the alkali metal layer may deposit on the surface of the negative electrode plate during the cycling process of the battery cell 100.

In the foregoing solution, as the battery cell includes the negative electrode plate with the alkali metal, the technical solution of this application may also be applied to battery cells with alkali metal negative electrodes.

Additionally, the determination of the type of the alkali metal may be based on the type of ions that reversibly intercalate into/deintercalate from the positive electrode active material.

[Positive electrode plate]

The positive electrode plate includes a positive electrode current collector and a positive electrode film layer provided on at least one surface of the positive electrode current collector, and the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

In some embodiments, the positive electrode current collector may use a metal foil current collector or a composite current collector. For example, aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments, the positive electrode active material may be a well-known positive electrode active material used for a battery in the art. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One of these positive electrode active materials may be used alone, or two or more of them may be used in combination. Examples of the lithium transition metal oxide may include but are not limited to at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM333 for short), $LiNi_{0.5}Co_{0.2}Mn_{0.3}O_2$ (NCM523 for short), $LiNi_{0.5}Co_{0.25}Mn_{0.25}O_2$ (NCM211 for short), $LiNi_{0.6}Co_{0.2}Mn_{0.2}O_2$ (NCM622 for short), and $LiNi_{0.8}Co_{0.1}Mn_{0.1}O_2$ (NCM811 for short)), lithium nickel aluminum cobalt oxide (for example, $LiNi_{0.85}Co_{0.15}Al_{0.05}O_2$), and modified compounds thereof. Examples of the olivine-structured lithium-containing phosphate may include but are not limited to at least one of lithium iron phosphate (for example, $LiFePO_4$ (LFP for short)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon.

In some embodiments, the positive electrode active material may also include at least one of the following materials: sodium transition metal oxide, polyanionic compound, and Prussian blue analog. However, this application is not limited to such materials, and may alternatively use other conventional well-known materials that can be used as positive electrode active materials for batteries. One of these positive electrode active materials may be used alone, or two or more of them may be used in combination.

In some embodiments, for the sodium transition metal oxide, the transition metal may be at least one of Mn, Fe, Ni, Co, Cr, Cu, Ti, Zn, V, Zr, and Ce. The sodium transition metal oxide is, for example, $Na_xMO_2$, where M is one or more of Ti, V, Mn, Co, Ni, Fe, Cr, and Cu, and $0<x\leq1$.

In some embodiments, the polyanionic compound may be a compound having a sodium ion, a transition metal ion, and a tetrahedral $(YO_4)^{n-}$ anionic unit. The transition metal may be at least one of Mn, Fe, Ni, Co, Cr, Cu, Ti, Zn, V, Zr, and Ce; Y may be at least one of P, S, and Si; and n denotes the valence state of $(YO_4)^{n-}$.

The polyanionic compound may alternatively be a type of compounds having sodium ions, transition metal ions, tetrahedral $(YO_4)^{n-}$ anionic units, and halogen anions. The transition metal may be at least one of Mn, Fe, Ni, Co, Cr, Cu, Ti, Zn, V, Zr, and Ce; Y may be at least one of P, S, and Si; n represents the valence state of $(YO_4)^{n-}$; and halogen may be at least one of F, Cl, and Br.

The polyanionic compound may alternatively be a type of compounds having sodium ions, tetrahedral $(YO_4)^{n-}$ anionic units, polyhedral units $(ZO_y)^{m+}$, and selectable halogen anions. Y may be at least one of P, S, and Si, n represents the valence state of $(YO_4)^{n-}$; Z represents a transition metal, which may be at least one of Mn, Fe, Ni, Co, Cr, Cu, Ti, Zn, V, Zr, and Ce; m represents the valence state of $(ZO_y)^{m+}$; and halogen may be at least one of F, Cl, and Br.

The polyanionic compound is, for example, at least one of $NaFePO_4$, $Na_3V_2(PO_4)_3$ (sodium vanadium phosphate, NVP for short), $Na_4Fe_3(PO_4)_2(P_2O_7)$, $NaM'PO_4F$ (M' being one or more of V, Fe, Mn, and Ni), and $Na_3(VO_y)_2(PO_4)_2F_{3-2y}$ ($0\leq y\leq1$).

The Prussian blue compound may be a compound having sodium ions, transition metal ions, and cyanogen ions (CN⁻). The transition metal may be at least one of Mn, Fe, Ni, Co, Cr, Cu, Ti, Zn, V, Zr, and Ce. The Prussian blue compound is, for example, $Na_aMe_bMe'_c(CN)_6$, where Me and Me' are independently at least one of Ni, Cu, Fe, Mn, Co, and Zn, where $0<a\leq2$, $0<b<1$, and $0<c<1$.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, or carbon nanofiber.

In some embodiments, the positive electrode plate may be prepared in the following manner: the constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

In addition, the positive electrode plate of this application does not exclude additional functional layers other than the positive electrode film layer. For example, in some embodiments, the positive electrode plate of this application further includes a conductive primer layer (for example, formed by a conductive agent and a binder) sandwiched between the positive electrode current collector and the positive electrode film layer, and disposed on the surface of the positive electrode current collector. In some other embodiments, the positive electrode plate of this application further includes a protection layer covering the surface of the positive electrode film layer.

[Negative electrode plate]

A negative electrode plate includes a negative electrode current collector and a negative electrode film layer disposed on at least one surface of the negative electrode current collector, and the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil or a composite current collector. For example, for the metal foil, a copper foil may be used. The composite current collector may include a polymer material matrix and a metal layer formed on at least one surface of the polymer material matrix. The composite current collector may be formed by applying a metal material (for example, copper, copper alloy, nickel, nickel alloy, titanium, titanium alloy, silver, and silver alloy) onto a polymer material matrix (for example, polypropylene (PP), polyethylene terephthalate (PET), polybutylene terephthalate (PBT), polystyrene (PS), or polyethylene (PE)), or by combining support capability with functional elements to form a current collector, such as carbon cloth, carbon film, carbonaceous, porous current collector, alloy-modified current collector, lithium-philic/sodium-philic modified current collector.

In some embodiments, the negative electrode plate may be formed by calendering a metal foil on or applying an inert layer of metal powder on a surface of a current collector; or may be a negative electrode with a functional coating, such as a carbon material coating (including single-walled and multi-walled conductive carbon tubes, superconducting carbon, acetylene black, carbon black, Ketjen black, carbon dots, carbon nanotubes, graphene, and carbon nanofiber, soft carbon and hard carbon, or the like), a lithium-philic/sodium-philic metal composite coating, or the like.

In some embodiments, the negative electrode plate is an alkali metal negative electrode. The alkali metal negative electrode may be a pre-set alkali metal layer on the surface of the current collector, or may be a negative electrode current collector where an alkali metal layer forms on the surface of the negative electrode current collector during the charge-discharge process. This is not limited in this application.

In some embodiments, the negative electrode active material may be a well-known negative electrode active material used for batteries in the art. For example, the negative electrode active material may include at least one of the following materials: artificial graphite, natural graphite, soft carbon, hard carbon, a silicon-based material, a tin-based material, lithium titanate, and the like. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, and tin alloy. However, this application is not limited to these materials, and may alternatively use other conventional materials that can be used as negative electrode active materials for batteries. One of these negative electrode active materials may be used alone, or two or more of them may be used in combination.

In some embodiments, the negative electrode film layer further optionally includes a binder. The binder may be at least one selected from styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode film layer may further optionally include another additive such as a thickener (for example, carboxymethyl cellulose sodium (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

[Electrolyte]

An electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, as an example, the electrolytic salt may be a lithium salt, and the lithium salt includes at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI, $LiN(FSO_2)_2$), lithium bis(trifluoromethanesulfonyl) imide ($LiN(CF_3SO_2)_2$), lithium trifluoromethanesulfonate ($CF_3SO_3Li$), lithium difluorophosphate ($LiPO_2F_2$), lithium di-fluoro(oxalato)borate (LiDFOB, $LiBC_2O_4F_2$), lithium bis(oxalato)borate (LiBOB, $LiB(C_2O_4)_2$), lithium difluoro(oxalato) phosphate (LiDODFP, $Li(C_2O_4)_2PF_2$), and lithium tetrafluoro(oxalato)phosphate (LiOTFP, $LiC_2O_4PF_4$).

In some embodiments, as an example, the electrolytic salt may alternatively be a sodium salt, which includes but is not limited to at least one of $NaPF_6$, $NaClO_4$, $NaBCl_4$, $NaSO_3CF_3$, and $Na(CH_3)C_6H_4SO_3$. One of the foregoing sodium salts may be used alone, or two or more of them may be used.

In some embodiments, the organic solvent may include but is not limited to at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS), and diethyl sulfone (ESE). The foregoing organic solvents may be used alone, or two or more of them may be used together. Optionally, two or more of the foregoing organic solvents are used.

In some embodiments, the additive may include a negative electrode film-forming additive and a positive electrode film-forming additive, or may include an additive that can improve some performance of the battery, for example, an additive for improving over-charge performance of the battery and an additive for improving high-temperature performance or low-temperature performance of the battery.

In some embodiments, as an example, the additives include but are not limited to at least one of fluoroethylene carbonate (FEC), vinylene carbonate (VC), vinyl ethylene carbonate (VEC), divinyl sulfone (DTD), propylene sulfate, ethylene sulfite (ES), 1,3-propane sultone (PS), 1,3-propylene sultone (PST), sulfonate cyclic quaternary ammonium salts, succinic anhydride, succinonitrile (SN), adiponitrile (AND), tris(trimethylsilyl) phosphate (TMSP), and tris(trimethylsilyl) borate (TMSB).

The electrolyte may be prepared using a conventional method in the art. For example, the organic solvent, sodium electrolytic salt, and selectable additives may be mixed well to obtain the electrolyte. There is no particular restriction on the order of adding the materials. For example, the sodium electrolytic salt and selectable additives are added to the organic solvent and mixed well to obtain the electrolyte; or the sodium electrolytic salt is added to the organic solvent, and then the selectable additives are added to the organic solvent and mixed well, to obtain the electrolyte.

[Separator]

In some embodiments, the secondary battery further includes a separator. The separator is sandwiched between the positive electrode plate and the negative electrode plate to mainly prevent short circuit between the positive and negative electrodes and allow active ions to pass through. The separator is not limited to any particular type in this application, and may be any well-known porous separator with good chemical stability and mechanical stability.

In some embodiments, a material of the separator may be at least one selected from glass fiber, non-woven fabric, polyethylene, polypropylene, and polyvinylidene fluoride. The separator may be a single-layer film or a multi-layer composite film and is not particularly limited. When the separator is a multi-layer composite film, all layers may be made of the same or different materials, which is not particularly limited.

In some embodiments, the positive electrode plate, the negative electrode plate, and the separator may be made into an electrode assembly 12 through winding or stacking.

In some embodiments, the battery cell 100 may include an outer package. The outer package may be used for packaging the electrode assembly 12 and electrolyte.

In some embodiments, the outer package of the battery cell 100 may be a hard shell, for example, a hard plastic shell, an aluminum shell, or a steel shell. The outer package of a secondary battery may alternatively be a soft pack, for example, a soft pouch. A material of the soft pack may be plastic. As the plastic, polypropylene, polybutylene terephthalate, and polybutylene succinate may be listed.

This application does not impose special limitations on the shape of the battery cell 100, and the battery cell may be cylindrical, rectangular, or of any other shapes. For example, FIG. 2 is a schematic diagram of a battery cell according to an embodiment of this application.

Still referring to FIG. 1, in some embodiments, the outer package may include a housing 12 and a cover plate 13. The housing 12 may include a base plate and side plates connected to the base plate, and the base plate and the side plates enclose an accommodating cavity. The housing 12 has an opening communicating with the accommodating cavity, and the cover plate 13 can cover the opening to close the accommodating cavity. A positive electrode plate, a negative electrode plate, and a separator may be made into an electrode assembly 11 through winding or lamination. The electrode assembly 11 is packaged in the accommodating cavity. The battery cell 100 may include one or more electrode assemblies 11, and persons skilled in the art may make choices based on actual requirements.

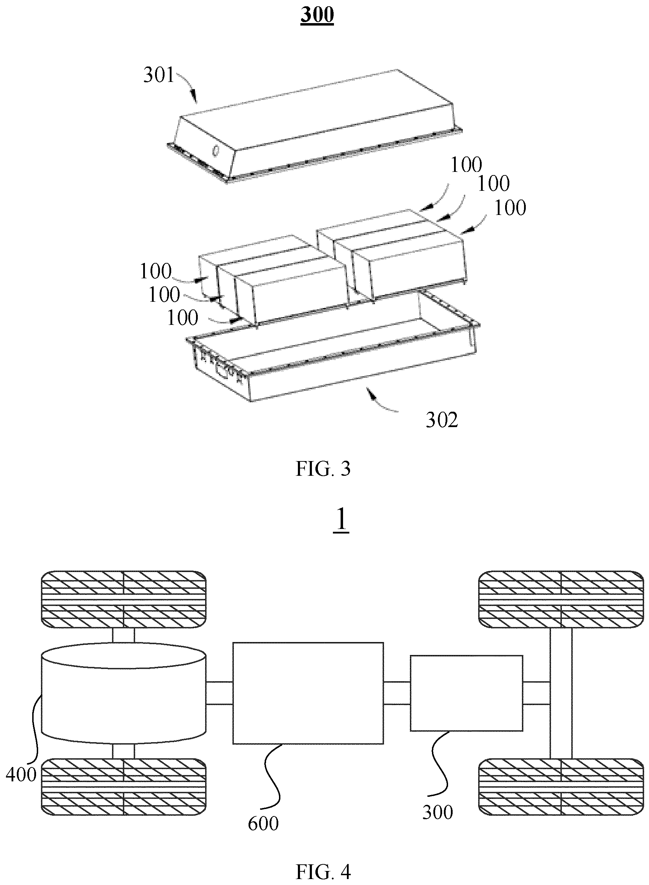

FIG. 3 is a schematic structural diagram of a battery 300 according to an embodiment of this application. As shown in FIG. 3, in the battery 300, multiple battery cells 100 may be sequentially arranged in a length direction of the battery 300. Certainly, the battery cells may alternatively be arranged in any other manners. Further, the multiple battery cells 100 may be fastened through fasteners.

Still referring to FIG. 3, the battery 300 may include a battery box and multiple battery cells 100 arranged in the battery box. The battery box includes an upper box body 301 and a lower box body 302. The upper box body 301 can cover the lower box body 302 to form an enclosed space for accommodating the battery cells 100. The multiple battery cells 100 may be arranged in the battery box in any manner.

In some embodiments, the battery cell 100 may be assembled into a battery module, and the battery module may include one or more battery cells 100. The specific quantity may be chosen by persons skilled in the art based on the use and capacity of the battery module.

In addition, this application further provides an electric apparatus. The electric apparatus includes at least one of the battery cell or the battery provided in this application. The battery cell or the battery may be used as a power source of the electric apparatus, or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

FIG. 4 is a schematic structural diagram of a vehicle according to an embodiment of this application. As shown in FIG. 4, the vehicle 1 may be a fossil fuel vehicle, a natural gas vehicle, or a new energy vehicle. The new energy vehicle may be a battery electric vehicle, a hybrid electric vehicle, a range-extended electric vehicle, or the like. A motor 400, a controller 600, and the battery 300 may be provided in the vehicle 1, where the controller 600 is configured to control the battery 300 to supply power to the motor 400. For example, the battery 300 may be provided at the bottom, front, or rear of the vehicle 1. The battery 300 may be configured to supply power to the vehicle 1. For example, the battery 300 may be used as an operational power source for the vehicle 1 that is configured for a circuit system of the vehicle 1, for example, to satisfy power needs of start, navigation, and running of the vehicle 1. In another embodiment of this application, the battery 300 can be used as not only the operational power source for the vehicle 1, but also as a driving power source for the vehicle 1, replacing or partially replacing fossil fuel or natural gas to provide driving traction for the vehicle 1.

For the electric apparatus, a battery cell or a battery may be selected based on requirements of the use the electric apparatus.

This electric apparatus is a battery electric vehicle, a hybrid electric vehicle, a plug-in hybrid electric vehicle, or the like. To satisfy a requirement of the electric apparatus for high power and high energy density of the battery, a battery cell or a battery may be used.

In another example, the apparatus may be a mobile phone, a tablet computer, a notebook computer, or the like. The apparatus usually needs to be light and thin, and the battery cell may be used as a power source.

[Examples]

The following describes examples of this application. The examples described below are illustrative and only used to explain this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

1. Preparation of lithium-ion battery

[Example 1]

(1.1) Preparation of positive electrode: LiFePO$_4$ (LFP), conductive agent acetylene black, and binder polyvinylidene fluoride (PVDF) were dissolved in solvent N-methylpyrrolidone (NMP) at a weight ratio of 97%:1%:2%. The resulting mixture was stirred fully to obtain a positive electrode slurry. Then the positive electrode slurry was uniformly applied onto positive electrode current collector aluminum foil, followed by drying, cold pressing, and cutting to obtain a positive electrode plate.

(1.2) Preparation of negative electrode: active substance artificial graphite, conductive agent acetylene black, binder styrene butadiene rubber (SBR), and thickener sodium carboxymethyl cellulose (CMC) were stirred fully and mixed well in a deionized water solvent system at a weight ratio of 97.5%:0.7%:1.8%:1%. The mixture was then applied onto Cu foil, dried, and cold-pressed to obtain a negative electrode plate.

(1.3) Preparation of electrolyte: Ethylene carbonate (EC) and ethyl methyl carbonate (EMC) were mixed at a mass ratio of 30%:70% and dissolved in 1M LiPF$_6$ lithium salt.

(1.4) Separator: A 20 $\mu$m PE porous polymer film was used.

(1.5) Assembly: The positive electrode plate, the separator, and the negative electrode plate were stacked in sequence, with the separator placed between the positive and negative electrodes for isolation, and then were wound to form an electrode assembly. The electrode assembly was placed in a designed housing, and electrolyte was added into the housing. Subsequently, the lithium-ion battery was obtained by hot pressing at 100°C and 250 MPa for 2 min. The lithium-ion battery had *V* of 159 mL, *CAP* of 215 Ah, and *V/CAP* of 0.740 mL/Ah.

[Example 2]

The preparation method of the lithium-ion battery in Example 2 was basically the same as that in Example 1, except that *V* was 218 mL, *CAP* was 203 Ah, and *V/CAP* was 1.074 mL/Ah.

[Example 3]

The preparation method of the lithium-ion battery in Example 3 was basically the same as that in Example 1, except that *V* was 286.46 mL, *CAP* was 195 Ah, and *V/CAP* was 1.469 mL/Ah.

[Example 4]

The preparation method of the lithium-ion battery in Example 4 was basically the same as that in Example 1, except that *V* was 333 mL, *CAP* was 185 Ah, and *V/CAP* was 1.800 mL/Ah.

[Example 5]

The preparation method of the lithium-ion battery in Example 5 was basically the same as that in Example 4, except that the volume *V* was 183.61 mL and *V/CAP* was 0.992 mL/Ah.

[Example 6]

The preparation method of the lithium-ion battery in Example 6 was basically the same as that in Example 4, except that the volume *V* was 149 mL and *V/CAP* was 0.805 mL/Ah.

[Example 7]

The preparation method of the lithium-ion battery in Example 7 was basically the same as that in Example 1, except that the volume $V$ was 138.25 mL and $V/CAP$ was 0.643 mL/Ah.

[Example 8]

The preparation method of the lithium-ion battery in Example 8 was basically the same as that in Example 1, except that the volume $V$ was 184 mL and $V/CAP$ was 0.856 mL/Ah.

[Example 9]

The preparation method of the lithium-ion battery in Example 9 was basically the same as that in Example 1, except that $V$ was 300 mL, $CAP$ was 295 Ah, and $V/CAP$ was 1.017 mL/Ah.

[Example 10]

The preparation method of the lithium-ion battery in Example 10 was basically the same as that in Example 1, except that $V$ was 308 mL, $CAP$ was 312 Ah, and $V/CAP$ was 0.987 mL/Ah.

[Example 11]

The preparation method of the lithium-ion battery in Example 11 was basically the same as that in Example 1, except that the volume $V$ was 114.03 mL and $V/CAP$ was 0.530 mL/Ah.

[Example 12]

The preparation method of the lithium-ion battery in Example 12 was basically the same as that in Example 1, except that the volume $V$ was 126.06 mL, $CAP$ was 286.5 Ah, and $V/CAP$ was 0.440 mL/Ah.

[Example 13]

The preparation method of the lithium-ion battery in Example 13 was basically the same as that in Example 1, except that the volume $V$ was 305.20 mL, $CAP$ was 145 Ah, and $V/CAP$ was 2.105 mL/Ah.

[Example 14]

The preparation method of the lithium-ion battery in Example 14 was basically the same as that in Example 1, except that the volume $V$ was 355.40 mL, $CAP$ was 132.6 Ah, and $V/CAP$ was 2.680 mL/Ah.

[Example 15]

The preparation method of the sodium-ion battery in Example 15 was basically the same as that in Example 10, except that: (1) Preparation of positive electrode: active substance sodium vanadium phosphate ($Na_3V_2(PO_4)_3$), conductive agent acetylene black, and binder polyvinylidene fluoride (PVDF) were dissolved in the solvent N-methylpyrrolidone (NMP) at a weight ratio of 97%:1%:2%, and stirred fully and mixed well to prepare a positive electrode active material. The positive electrode active material was then uniformly applied onto positive electrode current collector aluminum foil, followed by drying, cold-pressing, and slitting to obtain a positive electrode plate; (2) preparation of electrolyte: ethylene carbonate (EC) and ethyl methyl carbonate (EMC) were mixed at a mass ratio of 30%:70% and dissolved in a 1M NaPF6 sodium salt; and (3) $V$ was 217.04 mL, $CAP$ was 116 Ah, and $V/CAP$ was 1.871 mL/Ah.

[Example 16]

The preparation method of the sodium-ion battery in Example 16 was basically the same as that in Example 11, except that $V$ was 299.69 mL, $CAP$ was 193.6 Ah, and $V/CAP$ was 1.548 mL/Ah.

[Example 17]

The preparation method of the sodium-ion battery in Example 17 was basically the same as that in Example 11, except that *V* was 398.01 mL, *CAP* was 173.2 Ah, and *V/CAP* was 2.298 mL/Ah.

[Example 18]

The preparation method of the sodium-ion battery in Example 18 was basically the same as that in Example 11, except that *V* was 166.5 mL, *CAP* was 150.8 Ah, and *V/CAP* was 1.104 mL/Ah.

[Example 19]

The preparation method of the sodium-ion battery in Example 19 was basically the same as that in Example 11, except that *V* was 384.79 mL, *CAP* was 119.5 Ah, and *V/CAP* was 3.220 mL/Ah.

[Comparative example 1]

The preparation method of the lithium-ion battery in Comparative example 1 was basically the same as that in Example 1, except that *V* was 32 mL, *CAP* was 330 Ah, and *V/CAP* was 0.097 mL/Ah.

[Comparative example 2]

The preparation method of the sodium-ion battery in Comparative example 2 was basically the same as that in Example 11, except that *V* was 20 mL, *CAP* was 240 Ah, and *V/CAP* was 0.083 mL/Ah.

(2) Physical characterization of lithium-ion battery

Measurement of the remaining volume *V* in the housing of the battery in a fully discharged state
At room temperature, after mechanical parts, the electrode assembly, and other substances were placed in the housing, the electrolyte was injected into the housing until it was full. The volume of the injected electrolyte was calculated as $V_1$, and the volume of the electrolyte required to be added was calculated as $V_2$, where $V=V_1-V_2$.

**Table 1 Specific parameters of Examples 1-19 and Comparative examples 1 and 2**

| Group | Chemical System | V (mL) | CAP (Ah) | V/CAP (mL/Ah) | $C_0$ (mAh/g) | $\rho_0$ (g/cm³) | $200/(C_0 \times \rho_0)$ | $4000/(C_0 \times \rho_0)$ | $V/CAP/200/(C_0 \times \rho_0)$ |
|---|---|---|---|---|---|---|---|---|---|
| Example 1 | Lithium-ion battery | 159.00 | 215.0 | 0.740 | 3680 | 0.534 | 0.102 | 2.0 | 7.250 |
| Example 2 | Lithium-ion battery | 218.00 | 203.0 | 1.074 | 3680 | 0.534 | 0.102 | 2.0 | 10.528 |
| Example 3 | Lithium-ion battery | 286.46 | 195.0 | 1.469 | 3680 | 0.534 | 0.102 | 2.0 | 14.402 |
| Example 4 | Lithium-ion battery | 333.00 | 185.0 | 1.800 | 3680 | 0.534 | 0.102 | 2.0 | 17.647 |
| Example 5 | Lithium-ion battery | 183.61 | 185.0 | 0.992 | 3680 | 0.534 | 0.102 | 2.0 | 9.730 |
| Example 6 | Lithium-ion battery | 149.00 | 185.0 | 0.805 | 3680 | 0.534 | 0.102 | 2.0 | 7.896 |
| Example 7 | Lithium-ion battery | 138.25 | 215.0 | 0.643 | 3680 | 0.534 | 0.102 | 2.0 | 6.304 |
| Example 8 | Lithium-ion battery | 184.00 | 215.0 | 0.856 | 3680 | 0.534 | 0.102 | 2.0 | 8.390 |
| Example 9 | Lithium-ion battery | 300.00 | 295.0 | 1.017 | 3680 | 0.534 | 0.102 | 2.0 | 9.970 |
| Example 10 | Lithium-ion battery | 308.00 | 312.0 | 0.987 | 3680 | 0.534 | 0.102 | 2.0 | 9.678 |
| Example 11 | Lithium-ion battery | 114.03 | 215.0 | 0.530 | 3680 | 0.534 | 0.102 | 2.0 | 5.200 |
| Example 12 | Lithium-ion battery | 126.06 | 286.5 | 0.440 | 3680 | 0.534 | 0.102 | 2.0 | 4.314 |
| Example 13 | Lithium-ion battery | 305.20 | 145.0 | 2.105 | 3680 | 0.534 | 0.102 | 2.0 | 20.636 |
| Example 14 | Lithium-ion battery | 355.40 | 132.6 | 2.680 | 3680 | 0.534 | 0.102 | 2.0 | 26.277 |
| Example 15 | Sodium battery | 217.04 | 116.0 | 1.871 | 1166 | 0.968 | 0.177 | 3.5 | 10.571 |
| Example 16 | Sodium battery | 299.69 | 193.6 | 1.548 | 1166 | 0.968 | 0.177 | 3.5 | 8.746 |
| Example 17 | Sodium battery | 398.01 | 173.2 | 2.298 | 1166 | 0.968 | 0.177 | 3.5 | 12.983 |
| Example 18 | Sodium battery | 166.50 | 150.8 | 1.104 | 1166 | 0.968 | 0.177 | 3.5 | 6.238 |
| Example 19 | Sodium battery | 384.79 | 119.5 | 3.220 | 1166 | 0.968 | 0.177 | 3.5 | 18.192 |
| Comparative example 1 | Lithium-ion battery | 32.00 | 330.0 | 0.097 | 3680 | 0.534 | 0.102 | 2.035 | 0.951 |
| Comparative example 2 | Sodium battery | 20.00 | 240.0 | 0.083 | 1166 | 0.968 | 0.177 | 3.544 | 0.471 |

(3) Performance characterization of lithium-ion battery

(3.1) Volume change rate of negative electrode plate

At room temperature, the lithium-ion battery was charged at a constant current of 0.33C to 3.65 V and charged at a constant voltage of 3.65 V to a current of 0.05C. Then, the lithium-ion battery was discharged at a constant current of 0.33C to 2.5 V, with a discharge capacity this time being a discharge capacity of the lithium-ion battery before high-temperature storage. Next, the lithium-ion battery was charged at a constant current of 0.33C to 3.65 V and charged at a constant voltage of 3.65 V to the current of 0.05C, so as to fully charge the lithium-ion battery. The lithium-ion battery was then stored at 60°C for 60 days. After storage, the lithium-ion battery was placed in a room temperature environment and disassembled to obtain the negative electrode plate. The volume of the battery was tested using a drainage method. A swelling rate of the negative electrode plate=(volume after storage/volume before storage)×100%. The test results are shown in Table 2.

(3.2) Internal pressure test of battery

At room temperature, the lithium-ion battery was charged at a constant current of 0.33C to 3.65 V, and then charged at a constant voltage of 3.65 V to a current of 0.05C. Next, the lithium-ion battery was discharged at a constant current of 0.33C to 2.5 V. A pressure sensor was inserted into the lithium-ion battery to measure the internal pressure of the battery. The test results are shown in Table 2.

(3.3) Test of state of explosion-proof valve

At room temperature, the lithium-ion battery was charged at a constant current of 0.33C to 3.65 V and charged at a constant voltage of 3.65 V to a current of 0.05C. Then, the lithium-ion battery was discharged at a constant current of 0.33C to 2.5 V. The lithium-ion battery was placed under room temperature conditions to observe the state of the explosion-proof valve. The test results are shown in Table 2.

(3.4) Test of volumetric energy density *VED* of battery

At room temperature, the battery was charged at a constant current of 0.33C to a full charge voltage and charged at the constant full charge voltage until the current was ≤0.05C. The battery was then discharged at a constant current of 0.33C to a full discharge voltage to obtain a discharge energy Q. The length, width, and height of the shell of the battery were measured to calculate the volume V of the battery. The specific values of the full charge voltage and full discharge voltage of each battery cell may be referenced from the factory design of the battery cell or determined based on the usual upper cutoff voltage and lower cutoff voltage corresponding to the positive electrode material of the battery cell during charging and discharging. The volumetric energy density *VED* of the battery=discharge energy Q/the volume V of the battery, with the volumetric energy density measured in Wh/L.

**Table 2 Battery performance of Examples 1-19 and Comparative examples 1 and 2**

| Group | Volume change rate of negative electrode plate | Internal pressure of battery (MPa) | Whether the explosion-proof valve was breached | Volumetric energy density (Wh/L) |
|---|---|---|---|---|
| Example 1 | 307% | 0.3 | No | 494 |
| Example 2 | 307% | 0.13 | No | 467 |
| Example 3 | 307% | 0.09 | No | 450 |
| Example 4 | 307% | 0.06 | No | 494 |
| Example 5 | 307% | 0.15 | No | 494 |
| Example 6 | 307% | 0.21 | No | 494 |
| Example 7 | 307% | 0.32 | No | 494 |
| Example 8 | 307% | 0.19 | No | 494 |
| Example 9 | 304% | 0.34 | No | 675 |
| Example 10 | 374% | 0.65 | No | 715 |

(continued)

| Group | Volume change rate of negative electrode plate | Internal pressure of battery (MPa) | Whether the explosion-proof valve was breached | Volumetric energy density (Wh/L) |
|---|---|---|---|---|
| Example 11 | 398% | 0.73 | No | 450 |
| Example 12 | 388% | 0.69 | No | 458 |
| Example 13 | 294% | 0.11 | No | 403 |
| Example 14 | 272% | 0.07 | No | 396 |
| Example 15 | 362% | 0.19 | No | 250 |
| Example 16 | 358% | 0.35 | No | 460 |
| Example 17 | 328% | 0.28 | No | 420 |
| Example 18 | 379% | 0.35 | No | 380 |
| Example 19 | 391% | 0.39 | No | 375 |
| Comparative example 1 | 500% | 1.2 | Yes | 494 |
| Comparative example 2 | 462% | 1.66 | Yes | 533 |

Based on Examples 1-19 and Comparative examples 1 and 2, it can be known that when $V/CAP$ is not less than $200/(C_0 \times \rho_0)$ the volume change rate of the negative electrode plate of the battery is within the normal range, the internal pressure of the battery is relatively low, and the explosion-proof valve of the battery is not breached. To be specific, when $V/CAP$ of the battery is greater than $200/(C_0 \times \rho_0)$, the safety performance of the battery can be improved.

Based on Examples 1-12 and Examples 13-17, it can be known that the technical solution of this application may be applied to various battery systems.

Based on Examples 1-19, it can be known that when $V/CAP$ is not greater than $4000/(C_0 \times \rho_0)$, the volume change rate of the negative electrode plate of the battery and the internal pressure of the battery are relatively low, and the explosion-proof valve of the battery is not breached, but the volumetric energy density of the battery is relatively low. To be specific, when $V/CAP$ of the battery is not less than $200/(C_0 \times \rho_0)$, and further, not more than $4000/(C_0 \times \rho_0)$, the battery can have improved safety performance while maintaining a high volumetric energy density.

Based on Examples 1-14, it can be known that when the battery cell is a lithium battery cell, and the ratio of $V/CAP$ to $200/(C_0 \times \rho_0)$ is maintained in the range of 2-20 mL/Ah, particularly 2-10 mL/Ah, the battery can achieve both safety performance and a high volumetric energy density.

Based on Examples 15-19, it can be known that when the battery cell is a sodium battery cell, the ratio of $V/CAP$ to $200/(C_0 \times \rho_0)$ is maintained in the range of 2-30 mL/Ah, particularly 2-13 mL/Ah, the battery can achieve both safety performance and a high volumetric energy density.

It should be noted that this application is not limited to the foregoing embodiments. The foregoing embodiments are merely examples, and embodiments having substantially the same constructions and having the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

**Claims**

1. A battery cell, comprising:

    an electrode assembly;
    an electrolyte; and
    a housing, configured to accommodate the electrode assembly and the electrolyte; wherein
    the battery cell satisfies,

$$\frac{V}{CAP} \geq \frac{200}{(C_0 \times \rho_0)},$$

wherein

$V$ represents a remaining volume inside the housing of the battery cell in a fully discharged state, measured in mL;

$CAP$ represents a nominal capacity of the battery cell, measured in Ah;

$C_0$ represents a theoretical specific capacity of a corresponding alkali metal in the battery cell, measured in mAh/g; and

$\rho_0$ represents a theoretical density of the corresponding alkali metal in the battery cell, measured in g/cm$^3$.

2. The battery cell according to claim 1, wherein the battery cell satisfies:

$$\frac{V}{CAP} \leq \frac{4000}{(C_0 \times \rho_0)}.$$

3. The battery cell according to claim 1 or 2, wherein the battery cell further satisfies at least one of the following conditions:

*(1) CAP* is not less than 1 Ah, optionally, 1 Ah≤*CAP*≤300 Ah;

(2)

$$500 \text{ mAh/g} \leq C_0 \leq 3700 \text{ mAh/g};$$

(3)

$$0.5 \text{ g/cm}^3 \leq \rho_0 \leq 3.0 \text{ g/cm}^3;$$

and

(4) a volumetric energy density *VED* of the battery cell satisfies 100 Wh/L≤*VED*≤600 Wh/L.

4. The battery cell according to any one of claims 1 to 3, wherein under a condition that the battery cell is a lithium battery cell, the lithium battery cell satisfies at least one of the following conditions:

(1)

$$1500 \text{ mAh/g} \leq C_0 \leq 3700 \text{ mAh/g};$$

(2)

$$0.5 \text{ g/cm}^3 \leq \rho_0 \leq 2.0 \text{ g/cm}^3;$$

(3) the lithium battery cell is a lithium metal battery cell; and

(4) a volumetric energy density *VED* of the lithium battery cell satisfies 100 Wh/L≤*VED*≤900 Wh/L.

5. The battery cell according to any one of claims 1 to 4, wherein under the condition that the battery cell is a lithium battery cell, a ratio of *V*/*CAP* to 200/($C_0 \times \rho_0$) is 2-20 mL/Ah, optionally, 2-10 mL/Ah.

6. The battery cell according to any one of claims 1 to 3, wherein under a condition that the battery cell is a sodium battery cell, the sodium battery cell satisfies at least one of the following conditions:

(1)

$$400 \text{ mAh/g} \leq C_0 \leq 1200 \text{ mAh/g};$$

(2)

$$0.8 \text{ g/cm}^3 \leq \rho_0 \leq 3.5 \text{ g/cm}^3;$$

(3) the sodium battery cell is a sodium metal battery cell; and
(4) a volumetric energy density *VED* of the sodium battery cell satisfies 150 Wh/L≤*VED*≤300 Wh/L.

7.  The battery cell according to any one of claims 1 to 3 and 6, wherein under the condition that the battery cell is a sodium battery cell, a ratio of *V*/*CAP* to $200/(C_0 \times \rho_0)$ is 2-30 mL/Ah, optionally, 2-13 mL/Ah.

8.  The battery cell according to any one of claims 1 to 7, wherein the electrode assembly comprises a negative electrode plate, and the negative electrode plate comprises an alkali metal.

9.  A battery, comprising:
    multiple battery cells according to any one of claims 1 to 8.

10. An electric apparatus, comprising:
    the battery according to claim 9, wherein the battery is configured to supply electrical energy.

**100**

FIG. 1

**100**

FIG. 2

**300**

FIG. 3

**1**

FIG. 4

## INTERNATIONAL SEARCH REPORT

| International application No. |
| --- |
| **PCT/CN2023/082195** |

**A.    CLASSIFICATION OF SUBJECT MATTER**

H01M10/0525(2010.01)i;  H01M10/54(2006.01)i

According to International Patent Classification (IPC) or to both national classification and IPC

**B.    FIELDS SEARCHED**

Minimum documentation searched (classification system followed by classification symbols)

IPC:  H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 电芯, 电极组件, 锂, 钠, 容量, 剩余, 体积, 空间, 密度, battery, cell, separat+, electrode, assembl+, lithium, sodium, capacity, residual, remain+, volume, space, density

**C.    DOCUMENTS CONSIDERED TO BE RELEVANT**

| Category* | Citation of document, with indication, where appropriate, of the relevant passages | Relevant to claim No. |
| --- | --- | --- |
| X | CN 216872160 U (NINGDE CONTEMPORARY AMPEREX TECHNOLOGY CO., LTD.) 01 July 2022 (2022-07-01) description, paragraphs 70-133, and figures 1-3 | 1-10 |
| X | CN 108352479 A (PANASONIC INTELLECTUAL PROPERTY MANAGEMENT CO., LTD.) 31 July 2018 (2018-07-31) description, paragraphs 20-85 | 1-10 |
| A | JP H1064497 A (SHIN KOBE ELECTRIC MACH CO., LTD.) 06 March 1998 (1998-03-06) entire document | 1-10 |
| A | CN 1874046 A (YANG CHENGYUN) 06 December 2006 (2006-12-06) entire document | 1-10 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **18 August 2023** | **23 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/082195**

| Patent document cited in search report | | | Publication date (day/month/year) | Patent family member(s) | | | Publication date (day/month/year) |
|---|---|---|---|---|---|---|---|
| CN | 216872160 | U | 01 July 2022 | None | | | |
| CN | 108352479 | A | 31 July 2018 | US | 2018287118 | A1 | 04 October 2018 |
| | | | | JPWO | 2017110059 | A1 | 11 October 2018 |
| | | | | JP | 6688974 | B2 | 28 April 2020 |
| | | | | WO | 2017110059 | A1 | 29 June 2017 |
| JP | H1064497 | A | 06 March 1998 | None | | | |
| CN | 1874046 | A | 06 December 2006 | None | | | |

Form PCT/ISA/210 (patent family annex) (July 2022)